# EUROPEAN PATENT APPLICATION

(11) **EP 1 933 007 A2**
(43) Date of publication of application: **18.06.2008**
(21) Application number: 07121734.3
(22) Date of filing: 28.11.2007
(51) Int. Cl.: F01D 5/14, F01D 9/04, F02K 3/08

(54) **Gas turbine guide vanes with tandem airfoils and fuel injection and method of use**

(30) Priority: 07.12.2006 US 567796
(71) Applicant: General Electric Company, Schenectady, NY 12345 (US)
(72) Inventor: Bunker, Ronald Scott, Niskayuna, NY 12309 (US); Evulet, Andrei Tristan, Clifton Park, NY 12065 (US)
(74) Representative: Bedford, Grant Richard

(57) **Abstract**

Gas turbine engine guide vanes (12) that include a first flange (26) connected with a casing (18) of a gas turbine engine, a second flange (28) connected with the casing, a first airfoil (22) disposed between the first and second flanges and connected thereto, and a second airfoil (24) disposed between the first and second flanges and connected thereto so as to form a gap (34) extending radially between a first trailing portion of the first airfoil and a second leading portion of the second airfoil, the hollow portion being in flow communication with the gap so as to allow a gaseous fuel (26) to flow from the hollow portion through the gap and into a fluid flowing over the guide vane. Gas turbines that use the guide vanes and methods for injecting a gaseous fuel for combustion in a gas turbine engine are also disclosed.

## Description

The present invention relates in general to gas turbine engines and, more particularly, to guide vanes with tandem airfoils capable of flow turning and fuel injection.

In conventional gas turbine engine cycles, air is compressed in a multi-stage compressor and introduced into a combustor so that the temperature of the compressed air may be increased by heat addition generated from the combustion of fuel. Inlet guide vanes then properly orient the high-temperature gases leaving the combustor before expanding through a multi-stage turbine connected to the compressor by a shaft. Depending on the application, the remainder of the energy in the gases leaving the turbine may be transformed into kinetic energy in a nozzle to generate thrust or expand through an additional power turbine to produce shaft power to drive a generator, a propeller, a gear box, or the like. Because the thermodynamic efficiency of these cycles increases as the peak temperature reached in the combustion process is increased, operating temperatures of the gases inside the combustor and of the gases leaving the combustor in current engines are well above the melting point of the metals used to fabricate combustor components, turbine inlet guide vanes and turbine blades, thus requiring a significant amount of cooling of those components.

In conventional engines, cooling for the components operating in regions of high temperature is provided by either supplying more air to the combustor than the minimum amount needed for complete combustion, i.e., operating with excess air, and by bleeding a substantial amount of air from the compressor to provide cooling for the components disposed downstream of the combustor, e.g., inlet guide vanes and turbine blades. However, both of these approaches are detrimental to cycle performance. In the combustor, a significant pressure loss results from the flow of air through intricate passages necessary to provide the needed cooling, including dilution holes and film and/or transpiration cooling passages, to name a few. As to the air bled from the compressor, since any air that does not participate in the combustion process limits the overall amount of energy added to the cycle, elimination or reduction of bleed air will result in increased cycle performance.

Therefore, based at least on the foregoing summarized discussion, a need exist for a gas turbines with minimized combustor pressure losses and reduced bleed air requirements while maintaining the desired high levels of peak operating temperatures.

According to various aspects of the present invention, one or more of the above-summarized needs and others known in the art are addressed by guide vanes that include a first flange connected with a casing of a gas turbine engine, a second flange connected with the casing, a first airfoil disposed between the first and second flanges and connected thereto, and a second airfoil disposed between the first and second flanges and connected thereto so as to form a gap extending radially between a first trailing portion of the first airfoil and a second leading portion of the second airfoil, the hollow portion being in flow communication with the gap so as to allow a gaseous fuel to flow from the hollow portion through the gap and into a fluid flowing over the guide vane.

In another aspect of the disclosed invention, gas turbines are disclosed that include a compressor, a turbine connected to the compressor by a shaft, and a guide vane disposed upstream of the turbine. The guide vane in these gas turbines including a first flange connected with a casing of the engine, a second flange connected with the casing, a first airfoil disposed between the first and second flanges and connected thereto, and a second airfoil disposed between the first and second flanges and connected thereto so as to form a gap extending radially between a first trailing portion of the first airfoil and a second leading portion of the second airfoil, the hollow portion being in flow communication with the gap so as to allow a gaseous fuel to flow from the hollow portion through the gap and into a fluid flowing over the guide vane.

Methods for injecting a gaseous fuel for combustion in a gas turbine engine are also within the scope of the embodiments of the invention disclosed, such methods including the steps of injecting the gaseous fuel through a gap formed between a trailing portion of a first airfoil and a leading portion of a second airfoil disposed in tandem between a first flange and a second flange of a guide vane connected to a casing of the gas turbine engine, and deflecting the injected fuel towards suction and pressure sides of the second airfoil by a surface profile of the leading portion of the second airfoil by a Coanda effect to form a fuel and air mixture boundary layer along the suction and pressure sides.

The above brief description sets forth features of embodiments of the present invention in order that the detailed description that follows may be better understood, and in order that the present contributions to the art may be better appreciated. There are, of course, other features of the invention that will be described hereinafter and which will be for the subject matter of the appended claims.

In this respect, before explaining several preferred embodiments of the invention in detail, it is understood that the invention is not limited in its application to the details of the construction and to the arrangements of the components set forth in the following description or illustrated in the drawings. The invention is capable of other embodiments and of being practiced and carried out in various ways. Also, it is to be understood, that the phraseology and terminology employed herein are for the purpose of description and should not be regarded as limiting.

As such, those skilled in the art will appreciate that the conception, upon which disclosure is based, may readily be utilized as a basis for designing other structures, methods, and systems for carrying out the several purposes of the present invention. It is important, therefore, that the claims be regarded as including such equivalent constructions insofar as they do not depart from the spirit and scope of the present invention.

A more complete appreciation of the invention and many of the attendant advantages thereof will be readily obtained as the same becomes better understood by reference to the following detailed description when considered in connection with the accompanying drawings, wherein:
FIG. 1 illustrates a cutaway view of an exemplary tandem vane mounted to a casing and disposed before a turbine blade mounted to a turbine wheel, such as in a stage;
FIG. 2 illustrates a perspective view of an embodiment of a guide vane with tandem airfoils in accordance with aspects of the disclosed technique;
FIG. 3 is a cross-sectional perspective view taken along line 3-3 of FIG. 2;
FIG. 4 is a schematic representation of a flame structure in accordance with aspects of the disclosed technique; and
FIG. 5 illustrates a perspective view of another embodiment of a guide vane with tandem airfoils in accordance with aspects of the disclosed technique.

Referring now to the drawings, wherein like reference numerals designate identical or corresponding parts throughout the several views, several embodiments of the disclosed invention will be described. As it will be further explained below, the several embodiments of the disclosed invention relate to guide vanes with tandem airfoils with gaseous fuel introduced between the airfoils for subsequent mixing and combustion, thus eliminating the need for a combustor in combustorless engines or making possible the use of reheating in gas turbine engines where a portion of the total heat added takes place in a combustor while at the same time reducing the amount of cooling air bleed from a compressor.

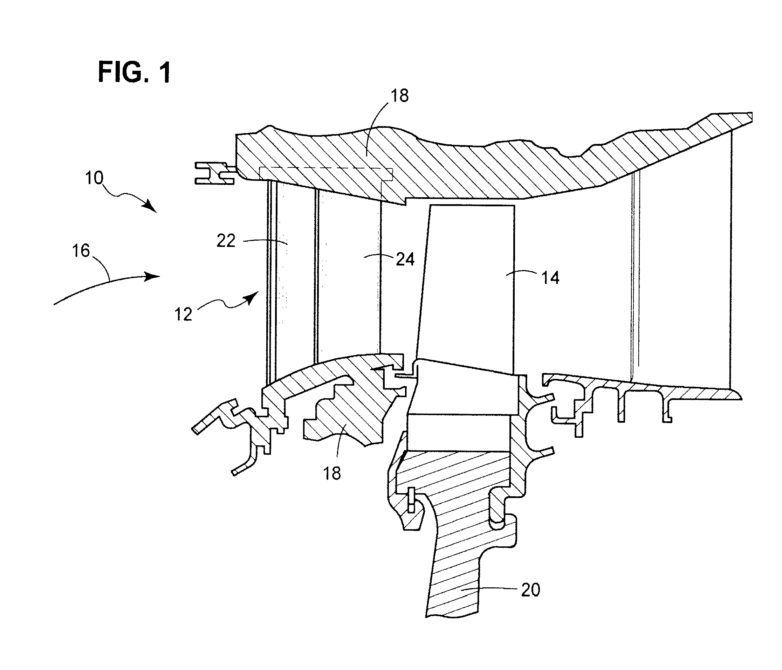

As shown in FIG. 1, a stage 10 may comprise a plurality of tandem vanes 12 (or "tandem nozzles" or "tandem stators") located upstream of a plurality of blades 14 (or "buckets" or "rotors"), relative to an exemplary, representative, intended flow direction 16. The tandem vanes 12 may be mounted to a casing 18 of, for example, a portion of a gas turbine engine. The blades 14 may be mounted to a turbine wheel 20. In one aspect, the tandem vanes 12 may be considered to be a relatively stationary component, and the blades 14 may be considered to be a relatively rotatable component. In operation, gases supplied from a combustor located upstream of the tandem vanes 12 are turned into the desired orientation for proper expansion through the blades 14 by the tandem vanes 12. In particular, the tandem vanes 12 may be configured to optimize, promote or enhance an aerodynamic efficiency in extraction of work (e.g., shaft power) from the gas by the blades 14. However, as further explained herein below, tandem vanes 12 are also configured to introduce fuel in the gas flow for purposes of reheating or as the only source of heat addition, i.e., in combustorless engines. FIG. 1 illustrates one stage 10. However, as understood by those of ordinary skill, gas turbine engines typically have turbines that are multi-staged with a plurality of turbine wheels 20 carrying blades 14, each turbine wheel 20 preceded by the guide vanes 12. Therefore, the disclosed embodiments may be used as inlet guide vanes or subsequent stators in the engine.

In one example, the turbine wheel 20 may be connected to a rotatable shaft (not shown). Also, the casing 18 may be rotatably isolated from the shaft by a bearing (not shown), as will be understood by those skilled in the art. In one aspect, the stage 10 may comprise a turbine first stage receiving a high temperature, high-pressure (e.g., gas) mixture from a combustor (not shown). As will be further understood by those skilled in the art, the shaft may be connected with an electrical generator set (e.g., a rotor/stator system) to generate electricity. In another aspect, referring to FIG. 1, the stage 10 may be followed by additional (e.g., second, third, or fourth) stages (not shown) of tandem vanes 12 and blades 14. Although different stages may perform comparable functions, individual components within one stage may have different designs (e.g., different sizes, materials, and/or complexities of manufacturing procedures) from those of another stage. For example, in a turbine, each stage may progressively become larger in size to accommodate expansion of gases with pressure drop or work extraction.

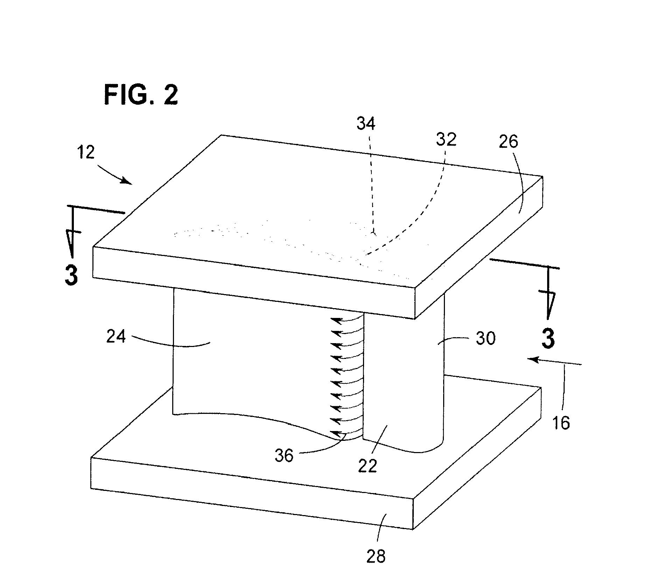

In one aspect of the several embodiments of the disclosed invention, as illustrated in FIG. 2, a singlet tandem vane 12 may comprise a first airfoil 22 located ahead of a second airfoil 24, relative to the exemplary flow direction 16. First airfoil 22 and second airfoil 24 are typically disposed between and connected to a first flange 26 and a second flange 28. First flange 26 may be referred to as a "first end wall," and second flange 28 may be referred to as a "second end wall." In one aspect, first airfoil 22 may be considered to comprise a leading airfoil, and second airfoil 24 may be considered to comprise a trailing airfoil. First airfoil 22 includes a first leading portion 30, and second airfoil 24 includes a second leading portion 32. As illustrated in FIG. 2, a gap 34 is formed between the trailing portion of the first airfoil 22 and the leading portion 32 of the second airfoil 24. With reference to singlet tandem vane 12 (FIG. 2), a single vane unit is located between and connected to the same flanges. In addition, the vane unit may be considered to represent a functional or structural unit, for instance, of a vane component of a stage. Moreover, those of ordinary skill in the art will understand that doublet tandem vanes, referring to a pair of vane units located between and connected to the same flanges, or, for that matter, tandem vane units that include other numbers of tandem airfoils (e.g., staggered or offset) arrangements, are also within the scope of the disclosed embodiments.

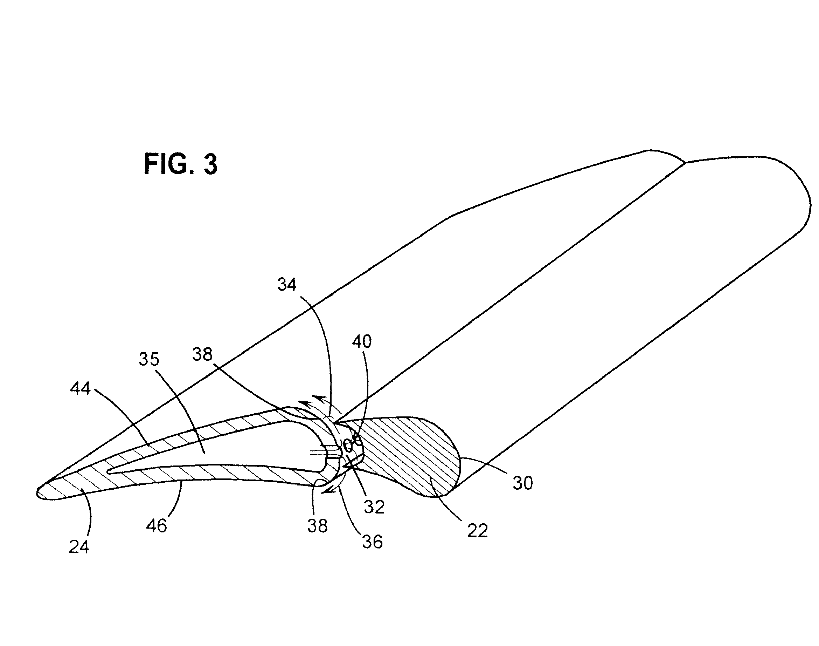

FIG. 3 illustrates a cross-sectional perspective view of tandem vanes 12 taken along line 3-3 of FIG. 2. As illustrated in FIG. 3, between first airfoil 22 and second airfoil 24 a gap 34 is provided, through which fuel 36 is supplied for combustion along Coanda surfaces 38 configured to enhance the mixing efficiency of the fuel 36 with air flowing along the direction 16 (as shown in FIG. 2). As used herein, the term "Coanda effect" refers to the tendency of a stream of fluid to attach itself to a nearby surface and to remain attached even when the surface curves away from the original direction of fluid motion.

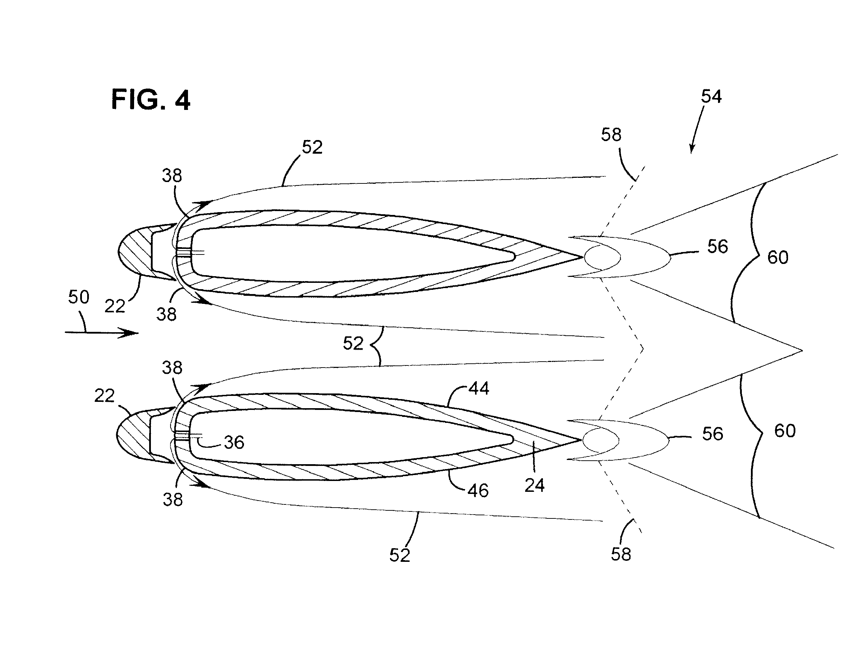

The introduction of fuel 36 from a hollow portion 35 (FIG. 3) of the first airfoil 22 may be by use of orifices 40 (illustrated in FIG. 3) or a slot (not shown). After introduction, the fuel 36 is deflected over the Coanda surfaces 38. The geometry and dimensions of the Coanda surfaces 38 may be selected/optimized based upon a desired premixing efficiency and the operational conditions including factors such as, but not limited to, fuel pressure, fuel temperature, temperature of incoming air, and fuel injection velocity. Examples of fuel include natural gas, high hydrogen gas, hydrogen, biogas, carbon monoxide and syngas. However, a variety of other fuels may be employed. In the illustrated embodiment, the Coanda surfaces 38 facilitate attachment of the introduced fuel 36 along external surfaces 44 and 46 on the suction and pressure sides of second airfoil 24, respectively, so as to form a fuel and air mixture boundary layer 52 (shown in FIG. 4) based upon the Coanda effect along both external surfaces 44 and 46 of second airfoil 24. Additionally, each of these fuel and air mixture boundary layers 52 growing adjacent the Coanda surfaces 38 induces air entrainment from the free stream, thereby enhancing the mixing efficiency of fuel and oxidizer before the combustion zone located in a region downstream of second airfoil 24, as qualitatively illustrated in FIG. 4.

As just indicated, the above-described fuel and air mixture boundary layer 52 is formed by the Coanda effect. In the illustrated embodiment, the fuel flow 36 attaches to the Coanda surfaces 38 and remains attached even when the Coanda surfaces 38 curve away from an initial fuel flow direction. More specifically, as the fuel flow 36 emerges around the Coanda surfaces 38 there is a pressure difference across the flow, which deflects the fuel flow 36 closer to the Coanda surfaces 38. As will be appreciated by one of ordinary skill in the art, as the fuel flow 36 moves across the Coanda surfaces 38, a certain amount of skin friction occurs between the fuel flow 36 and the Coanda surfaces 38 while air is entrained. This resistance to the flow deflects the fuel flow 36 towards the Coanda surfaces 38, thereby causing it to remain close to the Coanda surfaces 38. Further, the fuel and air mixture boundary layer 52 formed by this mechanism entrains incoming airflow to form a shear layer with the injected fuel to promote mixing of the airflow and fuel.

FIG. 4 is a schematic of an exemplary reaction zone that may be established downstream of second airfoil 24. As illustrated, compressor discharge air 50 flowing over tandem vane 12 mix with fuel 36 in fuel and air mixture boundary layers 52 formed along external surfaces 44 and 46 of second airfoil 24 by the Coanda effect created by Coanda surfaces 38. Downstream of the trailing edge of second airfoil 24, triple flames 54 may be formed as the concentration of fuel and air varies locally. First, in a fuel rich region, small diffusion flame front pockets 56 are stabilized. Then, each diffusion flame may serve to stabilize a first lean partially premixed flame 58 at a minimum flammability limit and a second lean partially premixed flame front 60 formed of diluted products of the other two flames 56 and 58 and excess oxidizer. Once a substantial portion of the energy release process is complete, the heated gases at high pressure are expanded through blades 14 downstream of tandem vanes 12 (FIG. 1). Such a flame structure allows for a substantially lower flame temperature to be used, which may then be the same as the firing temperature. In one embodiment the tandem vane 12 are disposed directly downstream of a compressor outlet and will not require cooling. In addition, given that the local fuel and oxidizer concentrations are better controlled and the overall peak temperatures are decreased, NOₓ emissions can be substantially reduced. As understood by those of ordinary skill in the applicable arts, these triple flames, or tri-brachial flames, may also co-exist with bibrachial (or dual) flames as well, when one of the above-described regions vanishes (i.e. in case the diffusion regime vanishes).

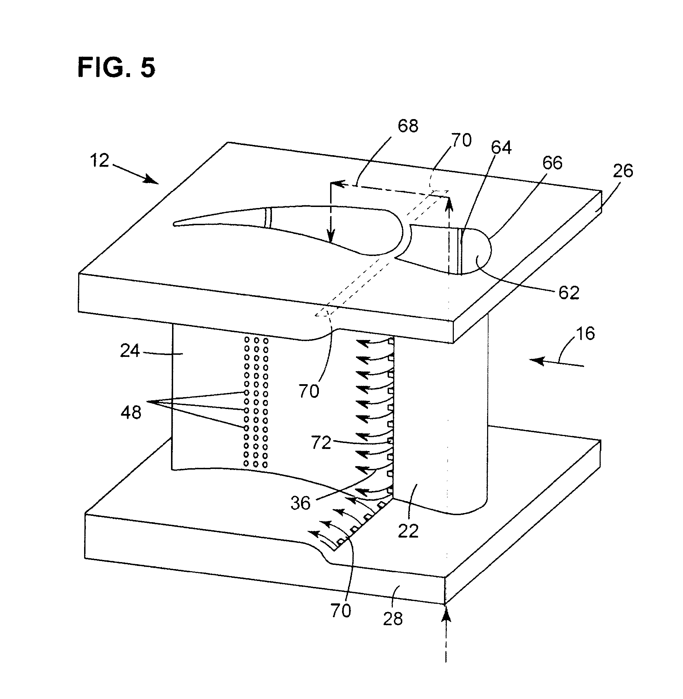

Referring again to FIG. 2, in one example, first airfoil 22 may comprise a solid airfoil, which may be referred to as "uncooled." In another example, as shown in FIG. 5, tandem vane 12 may include cooled first airfoil 22 and second airfoil 24. Second airfoil 24 may be convectively cooled by an internal fuel flow 68 before injection. In addition, depending on the application or axial location in the turbine, by proper choice of fuel flow circuits, the fuel 36 may be caused to flow first through first airfoil 22 and then through second airfoil 24 before injection, as illustrated by arrow 68 in FIG. 5, thus providing cooling to both airfoils and preheating the fuel before ignition. As illustrated in FIG. 5, in one embodiment, first airfoil 22 may include a hollow portion 62. For instance, first airfoil 22 may include ribs 64, to provide structural support for hollow portion 62 within first airfoil 22. In one example, first flange 26 may include an opening 66 providing fluid communication with hollow portion 62. In addition, the introduction of the fuel in a jet wall manner (i.e. tangential to the Coanda surface) may also be accomplished from individual locations or slots, rather than a single passage as illustrated in FIG. 2. As such, a plurality of fuel ports, small in size but not circular, preferably rectangular with one long side being the origin of the Coanda surface, may be used. In addition, as already described, the resulting boundary layer formed downstream of the original point of fuel injection contains a mixture of fuel and air entrained in between the location of these slots. The injection of fuel in multiple slots ensures good entrainment/acceleration and mixing of air and fuel in the boundary layer, which remains attached to the surface. As illustrated in FIG. 5, these slots may be formed by placing shims or spacers sandwiched between the fore and aft vanes, the shims or spacers having a profile that allows gaps from location to location.

In another embodiment, an exterior surface of second airfoil 24 may typically include a plurality of holes 48 (FIG. 5) therethrough for the injection of air into the fuel and air mixture boundary layer 52, thus enhancing the mixing process of fuel and air before the flame front. In addition, as known in the art, other orifices may be provided in first airfoil 22 and/or second airfoil 24 in fluid communication with hollow portions thereof, such as in a film-cooling configuration. For instance, singlet tandem vane 12 may be configured for any cooling design, such as open-circuit cooling, closed-cooling or film-cooling configurations, as will be understood by those skilled in the art. Since fuel flows through first airfoil 22 and second airfoil 24 to provide the required cooling of those two components, the need for bleed air from the compressor is substantially minimized.

Referring to FIG. 5, fuel may be supplied through a conduit (not shown) in casing 18 for flowing though opening 66, into hollow 62 in the first airfoil 22. As already explained, such fuel may serve to keep the temperature of constituent material for the guide vane 12 within certain acceptable limits, in view of the hot gas ducted by the guide vane 12 to one or more instances of blade 14 in application when combustion upstream of the guide vane 12 has already taken place. Any number of comparable features described herein for first airfoil 22 may or may not be implemented for second airfoil 24. Further, any number of features described herein for first flange 26 may be instead or additionally implemented for second flange 28.

It should be noted, as illustrated in FIG. 5, that one or both of the first and second flanges 26 and 28 may be used for fuel injection. That is, either or both first and second flanges 26 and 28 may contain, or be configured for, one or more Coanda-type slots 70 for fuel injection. These Coanda-type slots 70 may be disposed on the first and second flanges 26 and 28 on either side of the gap formed between the first and second airfoils 22 and 24 so as to extend from the gap to the edges of the flanges on both the suction and pressure sides of the airfoils. The Coanda slots 70 could be of many aspect ratios, with or without webbing between the slots. In one embodiment, these injection locations may connect the pressure side and suction side regions by essentially forming a box in the flow path that serves as the fuel injection site. In another embodiment, one of these Coanda-type slot 70 is disposed on both the first and second flanges 26 and 28 so as to form a continuous fuel injection passage with the gaps between the first and second airfoils 22 and 24 such that the main flow passage formed by adjacent guide vanes would only need a single continuous slot around the connecting surfaces of the pressure side, the suction side, and the first and second flanges. The slots in the first and second flanges 26 and 28 may also include fuel introduction by jets in cross flow or a combination of jets in cross flow and slots with Coanda surfaces. These fuel injection slots will require fuel to be delivered to the first and second flange regions, which may be accomplished in fabricated or cast hollows like those found in airfoils. For example, in some current vane designs, a complete vane segment is fabricated from three pieces, individual airfoil and two flanges that are separately cast, then brazed together.

Also, the use of additional air film cooling before or after fuel injection may also be accomplished on the first and second flanges 26 and 28 as well as on the first and second airfoils 22 and 24. In addition, besides being held in place by their connections to the first and second flanges 26 and 28 (as shown in FIG. 2), the first and second airfoils 22 and 24 may be additionally provided with shims or spacers 72 to form a desired injection slot geometry, as shown in FIG. 5. Such features of the geometry could also be made as part of the castings of these parts, or more likely as machined features after casting to obtain higher precision in dimensional control. Finally, while the first and second airfoils 22 and 24 may be fed with fuel to the interior their respective hollow regions, as already explained, the first and second flanges 26 and 28 may also be formed/fabricated to contain hollow regions for fuel feed.

As will be appreciated by those of ordinary skill in the art, several technical challenges are addressed by various aspects of this invention. Combining the functions of flow turning and heat release in the tandem vanes 12 results in a smaller package with lower investment costs compared to a conventional combustor system and turbine vane ring. In addition, in embodiments that require no cooling, tandem vanes may be made with low cost materials. As explained, since internal fuel flow provides the needed cooling while pre-heating the fuel before combustion, no cooling air is required by the tandem vanes 12, thereby saving a significant amount of non-chargeable air and some chargeable air. Furthermore, NOₓ emissions can be reduced significantly by using the air in combustion. The tandem vanes 12 may be used for the combustion of H₂ or other manufactured gases, such as syngas (which are gases rich in carbon monoxide and hydrogen obtained from gasification processes of coal or other materials), with a much lower system pressure drop. With the substantial reduction in pressure drop while maintaining high levels of operating temperature, cycle efficiencies increases and reheat is possible by further reaction in tandem vanes disposed in the several stages of a multi-staged turbine.

As understood by those of ordinary skill in the applicable arts, the aerodynamics of the aft section of the tandem vanes may be used to advantageously inject H₂ or syngas fuel over Coanda-type surfaces, resulting in good mixing of fuel with the bulk air, followed by a flame zone after the trailing edge, and before the turbine blade row. The cooling air savings can be directly used in combustion to reduce emissions while flame-operating temperatures may be maintained at substantially low levels. The mixing process generated by the Coanda surface design uses fundamental fluid mechanics and, as such, may be tailored to different turbine designs, thus also leading to the application of reheat with compact tandem-vane sections.

Based on the disclosed tandem vanes, those of ordinary skill in the art will appreciate that it is possible to alter the fuel injection locations, the number of nozzle sections, or the specific trailing edge aerodynamics. Also, the addition of some air injection along the vane surface through orifices 48 shown schematically in FIG. 5 in an attempt to better mix the fuel with the bulk air is within the scope of the disclosed invention. In addition, particular sections of first and second airfoils (22, 24) may be aligned along the same mean camber line (or "mean chord line"), or be offset with distinct mean camber lines such as a first mean camber line and a second mean camber. Generally, an airfoil may be considered to comprise a pressure side (e.g., a concave side) and a suction side (e.g., a convex side). A mean camber line may be located midway between the pressure side and the suction side of an airfoil. Such a mean camber line may be considered to run down a middle of an airfoil shape in an in-line design, where first airfoil 22 and second airfoil 24 may share a mean camber line. In particular, first airfoil 22 and second airfoil 24 may be in-line or offset with respect to a mean camber line. Further, in an offset arrangement, first airfoil 22 and second airfoil 24 may have different mean camber lines. Moreover, three-dimensional aspects of first airfoil 22 and second airfoil 24 of the tandem vane may be considered. For instance, a shape of the mean camber line may change at some or all cross-sections. That is, configuration of the tandem vane 12 may consider a locus of individual mean camber lines at multiple cross-sections of first airfoil 22 or second airfoil 24.

As explained, the leading portion 30 of the first airfoil 22 of the tandem vane 12 performs the majority of the function of main flow turning, thus minimizing the need for the leading portion 32 of the first airfoil 22 to be bulky and allowing for more aggressive turning to be handled. At the same time, the leading portion of the second airfoil 24 of the tandem vane 12 adds the fuel injection by way of Coanda surfaces on both the pressure and suction sides of the nozzle at a location where the remaining flow turning will minimize and/or not cause destabilization of the fuel injection flow. In addition, the sizing and location of the nozzle throat (vane solidity and lead-trail portion division region) may be selected such that the vane throat occurs aft of the fuel injection site along the suction side. Furthermore, in other embodiments, the trailing edge portion containing the fuel injection may be altered in shape from the traditional aerodynamic airfoil so as to form a more symmetric trailing edge that allows deliberate and significant total flow expansion (diffusion), similar to that obtained by an uni-directional airfoil without bulk flow turning. Also, precise tandem vane portions may be varied depending upon design, where, in some cases, trailing portions may also be canted from the axis of the leading portion.

A method for injecting a gaseous fuel for combustion in a gas turbine engine is also within the scope of the disclosed invention. Such a method includes the steps of injecting the gaseous fuel through a gap formed between a trailing portion of a first airfoil and a leading portion of a second airfoil disposed in tandem between a first flange and a second flange of a guide vane connected to a casing of the gas turbine engine, and deflecting the injected fuel towards suction and pressure sides of the second airfoil by a surface profile of the leading portion of the second airfoil by a Coanda effect to form a fuel and air mixture boundary layer along the suction and pressure sides. As previously explained, such guide vanes may be inlet guide vanes, the first airfoil may be uncooled, and the gas turbine engine may be a combustorless engine. In addition, the hollow portion of the second airfoil may be a first hollow portion and the first airfoil may include a second hollow portion so as to allow preheating of the fuel before injecting the same by flowing it through the second hollow portion before flowing the fuel through the first hollow portion.

With respect to the above description, it should be realized that the optimum dimensional relationships for the parts of the invention, to include variations in size, form function and manner of operation, assembly and use, are deemed readily apparent and obvious to those skilled in the art, and therefore, all relationships equivalent to those illustrated in the drawings and described in the specification are intended to be encompassed only by the scope of appended claims.

In addition, while embodiments of the present invention have been shown in the drawings and fully described above with particularity and detail in connection with what is presently deemed to be practical and several of the preferred embodiments of the invention, it will be apparent to those of ordinary skill in the art that many modifications thereof may be made without departing from the principles and concepts set forth herein. Hence, the proper scope of the present invention should be determined only by the appended claims so as to encompass all such modifications and equivalents.

## Claims

1. A guide vane (12) with tandem airfoils, the guide vane comprising:
a first flange (26) configured to be connected with a casing (18) of a gas turbine engine;
a second flange (28) configured to be connected with the casing, the second flange being disposed apart from the first flange in a radial direction of the gas turbine engine;
a first airfoil (22) disposed between the first and second flanges and connected thereto, the first airfoil including a first leading portion and a first trailing portion; and
a second airfoil (24) having a second leading portion, a second trailing portion, and a hollow portion, the second airfoil being disposed between the first and second flanges and connected thereto so as to form a gap (34) extending radially between the first trailing portion of the first airfoil and the second leading portion of the second airfoil, wherein the hollow portion is in flow communication with the gap so as to allow a gaseous fuel (36) to flow from the hollow portion through the gap and into a fluid flowing over the guide vane.

2. The guide vane (12) according to claim 1, wherein the second leading portion comprises at least one profile (38) configured to deflect the fuel supplied through the gap toward pressure and suction sides (44, 46) of the second airfoil to form a fuel and air mixture boundary layer by a Coanda effect.

3. The guide vane (12) according to any preceding claim, wherein the guide vane is an inlet guide vane, the first airfoil is uncooled, and the gas turbine engine is a combustorless engine.

4. The guide vane (12) according to any preceding claim, wherein the hollow portion is a first hollow portion, the first airfoil comprises a second hollow portion, and the fuel is preheated by flowing through the second hollow portion before flowing through the first hollow portion.

5. The guide vane (12) according to any preceding claim, wherein the second leading portion comprises at least one slot configured to deliver fuel from the hollow portion to the profile (38) and the first leading portion comprises a plurality of orifices for fuel and/or air injection.

6. The guide vane (12) according to any preceding claim, further comprising:
at least one fuel injection slot having a Coanda surface thereon, the at least one fuel injection slot being disposed on a location selected from the group consisting of the first flange (26), the second flange (28), and combinations thereof.

7. The guide vane (12) according to claim 6, wherein the at least one fuel injection slot is disposed on both the first and second flanges (26, 28) so as to form a continuous fuel injection passage with the gap (34) between the first and second airfoils.

8. A gas turbine engine, comprising a guide vane (12) according to any one of claims 1-7.

9. A method for injecting a gaseous fuel (36) for combustion in a gas turbine engine, comprising:
injecting the gaseous fuel through a gap (34) formed between a trailing portion of a first airfoil (22) and a leading portion of a second airfoil (24) disposed in tandem between a first flange (26) and a second flange (28) of a guide vane (12) connected to a casing (18) of the gas turbine engine; and
deflecting the injected fuel towards suction and pressure sides (44 and 46) of the second airfoil by a surface profile (38) of the leading portion of the second airfoil by a Coanda effect to form a fuel and air mixture boundary layer (52) along the suction and pressure sides.
